# EUROPEAN PATENT SPECIFICATION

(11) **EP 0 338 984 B1**
(45) Date of publication and mention of the grant of the patent: **15.09.1993**
(21) Application number: 89810269.4
(22) Date of filing: 07.04.1989
(51) Int. Cl.: B62L 3/02

(54) **Bicycle brake lever assembly**
Fahrradbremshebelzusammenbau
Assemblage de levier de frein pour bicyclette

(30) Priority: 18.04.1988 JP 51961/88
(43) Date of publication of application: 25.10.1989
(73) Proprietor: MAEDA INDUSTRIES, LTD., Minamikawachi-gun Osaka (JP)
(72) Inventor: Wauke, Tsukasa, Mihara-cho Minamikawachi-gun Osaka (JP); Yamazaki, Toshimasa, Mihara-cho Minamikawachi-gun Osaka (JP)
(74) Representative: Baggiolini, Raimondo

(56) References cited:
- EP-A- 0 047 637
- CH-A- 562 122
- FR-A- 976 261
- FR-A- 1 498 904
- JP-U-42 006 015
- US-A- 3 974 712
- US-A- 4 425 819

## Description

This invention relates generally to bicycle brake lever assemblies. It relates more specifically to improvements in a bicycle brake lever assembly, particularly for a drop type handle bar, which is designed to support a rider's palm in addition to providing its inherent brake control function.

As is well known, many of sports bicycles such as racing bicycles are provided with a drop type handlebar which includes an intermediate straight portion centrally connected to a handlebar stem by means of a handlebar lug, and a pair of U-shaped, downwardly bent side portions formed at both ends of the straight portion. In such a handlebar, a brake lever assembly is mounted to each side portion to enable the rider to conduct braking operation while he (or she) grips the side portion in a high speed running posture.

Generally, a brake lever assembly for such a sports bicycle comprises a mount bracket fixed to each handlebar side portion to extend forward therefrom, and a brake lever pivotally connected to the mount bracket to extend downward therefrom. Conventionally, a brake control cable connected to a corresponding brake assembly extends in a curved form in front of the handlebar for connection to the mount bracket from above, as disclosed for example in U.S. Patent No. 3,974,712 to Kaufman et al or in Japanese Utility Model Publication No. 42-6015. Obviously, such an arrangement of the brake control cable, because of a large curve in front of the handlebar, deteriorates operability of the handlebar and aerodynamic characteristics in addition to detracting from visual attractiveness.

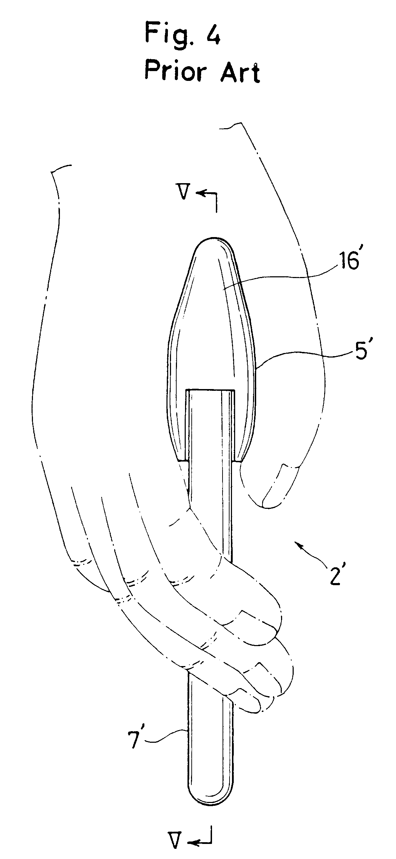

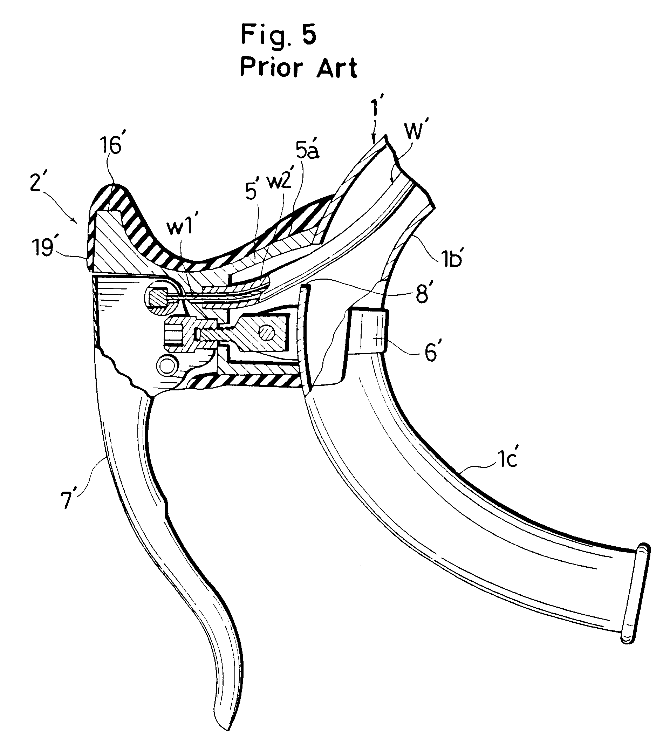

To eliminate the above problem, there has been proposed an improved brake lever assembly wherein a brake control cable, which is guided in or along a handlebar, is introduced into the mount bracket from behind, as disclosed for example in U.S. Patent No. 4,425,819 to Shimano. For the convenience of explanation, such an arrangement is shown in Figures 4 and 5 of the accompanying drawings.

Referring to Figures 4 and 5, the improved brake lever generally designated by reference numeral 2′ comprises a hollow mount bracket 5′ fixed by a mounting band 6′ to a corresponding side portion 1b′ of a known drop type handlebar 1′ to extend forward, and a brake lever 7′ pivotally connected to the mount bracket to extend downward therefrom. A brake control cable W, which is in the form of a double type cable including an inner cable w1′ and an outer cable w2′ enclosing the inner cable, extends within the handlebar 1′ and is introduced into the mount bracket through a suitable hole 8′ of the handlebar.

In running, the rider tries to assume an optimum riding posture depending on various purposes and road conditions. For example, when running at a high speed on a smooth ground, the rider normally grasps the end grip 1c′ of each handlebar side portion 1b′, thereby assuming a forwardly inclined riding posture. On the other hand, a more relaxing riding posture is required when running at a low speed. One good gripping portion for this purpose is the mount bracket 5′ because it still ensures quick braking operation.

In view of this, the mount bracket 5′ provides an upper surface 5a′ which is extended enough to work as a palm rest. The bracket is formed at a front end portion thereof with an integral hand stopper 16′ which projects upward from the palm resting surface 5a′. The mount bracket may preferably be covered by a rubber or resin coating 19′ to prevent hand slippage during riding and to facilitate gripping.

In the relaxing riding posture, the cyclist places the palm on the upper surface 5a′ of the mount bracket 5 with the thumb and the forefinger located on both sides of the hand stopper 16′, as shown in Figure 4. The remaining fingers together with the forefinger are lightly held in contact with the brake lever 7′ to be ready for braking operation.

In this riding posture, the rider's hand is restrained by the palm resting surface 5a′ from moving downward. Further, the rider's hand is placed fittingly between the hand stopper 16′ and the handlebar side portion 1b′, thus being prevented from moving back and forth. Moreover, the mount bracket 5′ or the hand stopper 16′ thereof is interposed between the thumb and the forefinger, so that the rider's hand is also prevented from moving widthwise of the bicycle. However, nothing is provided to prevent the rider's hand from moving upward.

It is of course possible to fully grip the mount bracket 5′. However, due to the relaxing nature of the illustrated riding posture as suitable for running at a low speed on a smooth ground, quite often, the rider simply places the palm onto the mount bracket substantially without applying a gripping force to the mount bracket 5′ or to the brake lever 7′. Thus, upon abrupt transition to a rough ground condition or upon riding over an abrupt ground recess or projection, the rider's hand may be unexpectedly lifted off the brake lever assembly or the handlebar, putting the cyclist into a great danger. Further, the absence of any means for preventing upward hand removal is visually recognizable to the rider who, for this reason, has an anxiety in using the mount bracket as an additional grip or palm rest. In fact, such mental instability sometimes makes the rider to rely only on the handlebar end grip 1c′ even if he (or she) is running at a low speed on a smooth ground after extreme physical exhaustion, further adding to such exhaustion.

It is, therefore, an object of the invention to provide a bicycle brake lever assembly which, while also functioning as an additional grip suitable for a relaxing riding posture, prevents unexpected hand removal even at the time of sudden upward shocks applied during running, thereby ensuring running safety in the relaxing riding posture.

According to the invention, there is provided a bicycle brake lever assembly to be mounted to a downwardly bent portion of a handlebar, said lever assembly comprising: a hollow mount bracket fixed to said bent portion to project foward therefrom, said mount bracket providing an upper surface to serve as a palm rest, said mount bracket allowing entry of a brake control cable from behind; a brake lever pivotally connected to said mount bracket to extend downward therefrom; and a hand stopper provided at a front portion of said mount bracket to extend upward above said upper surface: characterized in that said hand stopper has an upper portion projecting widthwise of the bicycle.

Advantageously, the upper portion of the hand stopper projects in both directions widthwise of the bicycle to engage, from above, the thumb and forefinger of a rider's hand, thereby more reliably preventing the rider's hand from being unexpectedly lifted off the mount bracket or the handlebar.

The invention will now be more specifically described, by way of example only, with reference to the accompanying drawings, in which:
Figure 1 is a perspective view showing a drop type handlebar provided with a pair of brake lever assemblies embodying the invention;
Figure 2 is an enlarged front view showing the brake lever assembly of Figure 1;
Figure 3 is a sectional view taken on lines III-III in Figure 2;
Figure 4 is a front view showing a prior art brake lever assembly; and
Figure 5 is a sectional view taken on lines V-V in Figure 4.

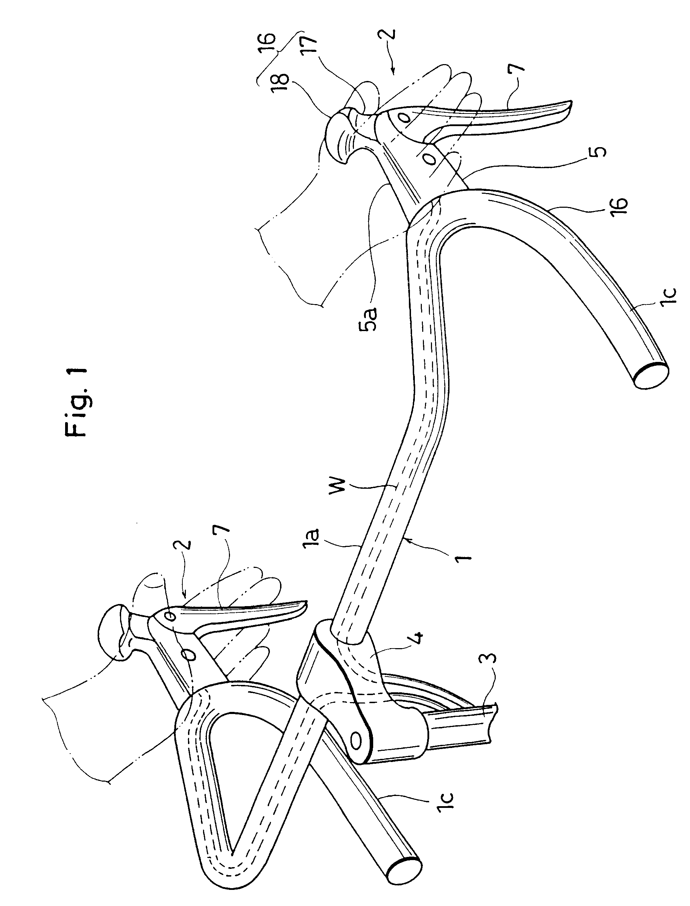

Referring now to Figure 1 of the accompanying drawings, there is illustrated a drop type handlebar 1 which is fitted with a pair of brake lever assemblies 2 embodying the invention. The handlebar 1 includes an intermediate straight portion 1a mounted to the upper end of a handlebar stem 3 by means of a handlebar lug 4, and a pair of downwardly bent, U-shaped side portions 1b extending from the respective ends of the intermediate straight portion 1a. Each side portion 1b provides a grip 1c used when assuming a forwardly inclined riding posture.

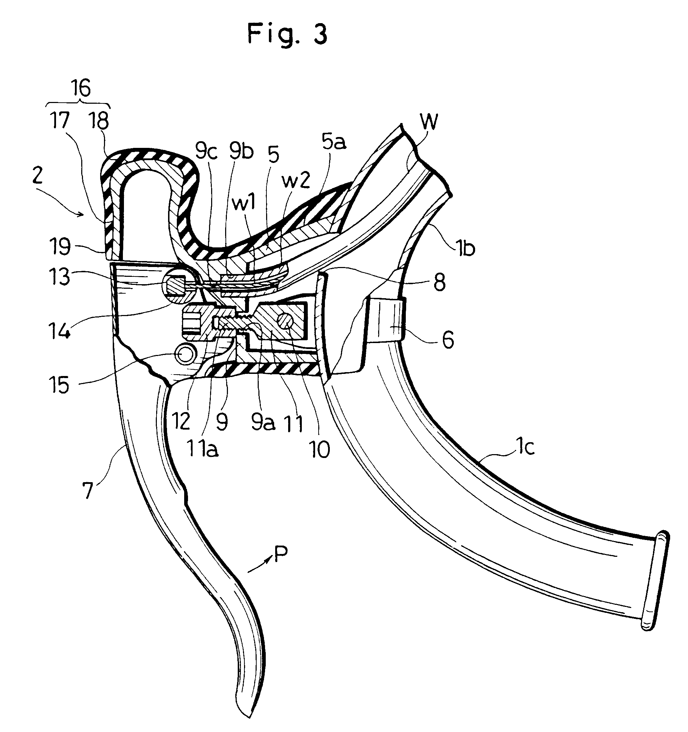

Each brake lever assembly 2 comprises a mount bracket 5 fixed via a mounting band 6 (see Figure 3) to a corresponding side portion 1b of the handlebar to project forwardly therefrom, and a brake lever 7 pivotally connected to the mount bracket 5 to extend downward therefrom. The mount bracket has an upper surface 5a workable as a palm rest.

As illustrated in Figures 1 and 3, a double type control cable W, which connects each brake lever assembly 2 to a corresponding brake assembly (not shown), includes an inner cable w1, and an outer cable w2 enclosing the inner cable. The control cable W is introduced into the handlebar lug 4 from below, guided within the handlebar 1, and taken through a hole 8 formed at a corresponding lever mounting position of the handlebar 1 to enter into the mount bracket.

As better shown in Figure 3, the mount bracket 5 is hollow and has an intermediate partition wall 9. The mounting band 6 is substantially circular and has a pair of ends connected to each other by a bridging pin 10. An engaging member 11 is supported on the bridging pin 10 and has a projecting threaded portion 11a which passes through a hole 9a formed in the partition wall 9. A lock nut 12 is screwed on the threaded portion 11a into abutment with the partition wall 9, so that the mount bracket 5 is fixed to the handlebar side portion 1b upon tightening of the lock nut.

The partition wall 9 of the mount bracket 9 is further formed with a larger diameter bottomed bore 9b as well as with a smaller diameter bore 9c in communication with the bottomed bore 9b. The outer cable w2 of the double type control cable W has one end anchored in the bottomed bore 9b, whereas the inner cable w1 extends through the smaller diameter bore 9c. One end of the inner cable w1 is provided with an enlarged head 13 which is arrested by a catch 14 rotatably mounted on an upper portion of the brake lever 7. Indicated at 15 is a pin which is used to pivotally connect the brake lever 7 to the mount bracket 5.

When the brake lever 7 is pivoted in the direction of an arrow P in Figure 3, the inner cable w1 engaging the lever is pulled relative to the outer cable w2 engaging the fixed mount bracket 5. As a result, the unillustrated brake assembly is actuated for braking in a known manner.

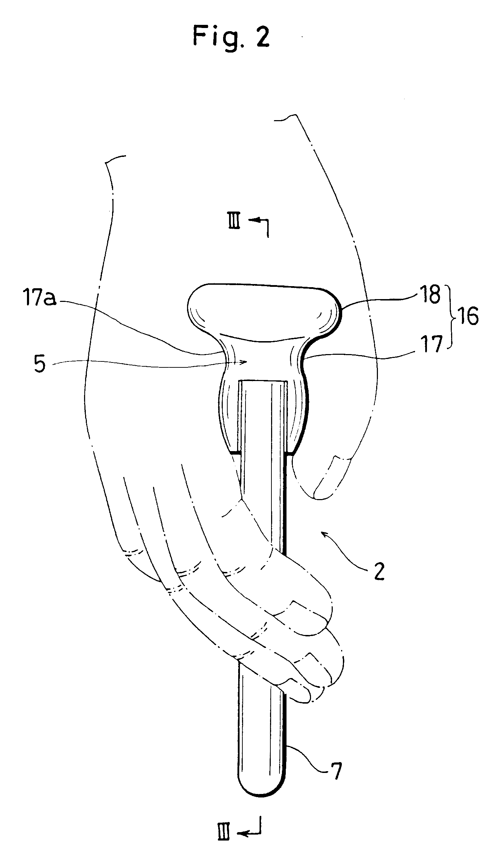

According to the embodiment illustrated in Figures 1 to 3, the mount bracket 5 has a front end integrally formed with a hand stopper 16 which projects upward from the bracket upper surface 5a. The hand stopper 16 includes a base portion 17 which is preferably rounded in cross section, and an upper portion 18 projecting laterally in both directions to lie over the thumb and forefinger of a rider's hand for engagement therewith, as best illustrated in Figure 2. Preferably, the upper portion 18 of the hand stopper is bulged rearwardly to slightly overlap the back of the rider's hand at a position between the thumb and the forefinger.

The stopper base portion 17 has a height generally equal to or slightly larger than the thickness of the rider's hand, so that the thumb and the forefinger may be placed below the laterally projecting stopper upper portion 18. The width of the stopper base portion 17 is such that it can be easily sandwiched between the rider's thumb and forefinger. To further facilitate such sandwiching, the base portion preferably includes a narrower waist portion 17a continuous with the upper portion 18. Further preferably, the mount bracket 5 is entirely covered by a rubber or resin coating 19 to prevent hand slippage and to protect the mount bracket.

In one riding posture, the rider's palm is rested on the upper surface 5a of the mount bracket 5, as illustrated in Figures 1 and 2. In this condition, the web portion of the rider's hand between the thumb and the forefinger is forced against the base portion 17 of the hand stopper 16, whereas the thumb and the forefingers themselves are placed under the laterally projecting upper portion 18, as described above. The remaining fingers together with the forefinger may be lightly held in contact with the brake lever 7 to be always ready for braking operation.

In this riding posture, the engagement from below of the thumb and the forefinger with the laterally projection upper portion 18 of the hand stopper 16 will prevent the rider' hand from being lifted off the mount bracket 5 even if an upward shock is unexpectedly applied upon abrupt change in riding conditions (e.g. upon riding over a ground recess or projection), consequently ensuring a riding safety. Further, the provision of the laterally projecting upper portion 18 eliminates the rider's anxiety toward unexpected hand removal from the handlebar 1, thereby assuring mentally stable riding.

The invention being thus described, it is obvious that the same may be varied in many ways. For instance, the upper portion 18 of the hand stopper 16 may project laterally only in one direction to engage either one of the thumb and the forefinger. Further, in case the coating 19 is made of a relatively hard material, this coating alone may provide the hand stopper, while the mount bracket 5 itself has no upward projection. Such variations are not to be regarded as a departure from the spirit and scope of the invention, and all such modifications as would be obvious to those skilled in the art are intended to be included within the scope of the following claims.

## Claims

1. A bicycle brake lever assembly to be mounted to a downwardly bent portion (1b) of a handlebar (1), said lever assembly comprising: a hollow mount bracket (5) fixed to said bent portion to project forward therefrom, said mount bracket providing an upper surface (5a) to serve as a palm rest, said mount bracket allowing entry of a brake control cable (W) from behind; a brake lever (7) pivotally connected to said mount bracket to extend downward therefrom; and a hand stopper (16) provided at a front portion of said mount bracket to extend upward above said upper surface: characterized in that said hand stopper (16) has an upper portion (18) projecting widthwise of the bicycle.

2. The brake lever assembly as defined in claim 1, wherein said upper portion (18) of said hand stopper (16) projects in both directions widthwise of the bicycle.

3. The brake lever assembly as defined in claim 1 or 2, wherein said hand stopper (16) has a base portion (17) including a narrower waist portion (17a) continuous with said upper portion (18).

4. The brake lever assembly as defined in any one of claims 1 to 3, wherein said upper portion (18) of said hand stopper (16) also projects slightly rearward.

5. The brake lever assembly as defined in any one of claims 1 to 4, wherein said hand stopper (16) is integral with said mount bracket (5).

6. The brake lever assembly as defined in claim 1, wherein said mount bracket (5) together with said hand stopper (16) is covered by a coating (19).

## Patentansprüche

1. Fahrradbremshebelaufbau zur Montage an einem abwärts abgebogenen Abschnitt (1b) einer Lenkstange (1) mit
einem hohlen Montagehalter (5), welcher an dem abgebogenen Abschnitt so befestigt ist, daß er davon nach vorne vorsteht, wobei der Montagehalter eine als Handflächenauflage fungierende obere Fläche (5a) bereitstellt, wobei der Montagehalter den Eintritt eines Bremssteuerkabels (W) von hinten ermöglicht,
einem Bremshebel (7), der drehbar mit dem Montagehalter so verbunden ist, daß er sich davon abwärts erstreckt, und mit einem Handanschlag (16), welcher an einem Vorderabschnitt des Montagehalters so vorgesehen ist, daß er sich aufwärts über die obere Flache erstreckt,
dadurch gekennzeichnet,
daß der Handanschlag (16) einen oberen Abschnitt (18) besitzt, welcher in Breitenrichtung des Fahrrades vorsteht.

2. Bremshebelaufbau nach Anspruch 1, in welcher der obere Abschnitt (18) des Handanschlags (16) in beide Breitenrichtungen des Fahrrades vorsteht.

3. Bremshebelaufbau nach Anspruch 1 oder 2, in welcher der Handanschlag (16) einen Basisabschnitt (17) besitzt, der einen engeren, mit dem oberen Abschnitt (18) zusammenhängenden Mittelabschnitt (17a) enthält.

4. Bremshebelaufbau nach einem der Ansprüche 1 bis 3, in welcher der obere Abschnitt (18) des Handanschlags (16) auch rückwärtig leicht vorsteht.

5. Bremshebelaufbau nach einem der Ansprüche 1 bis 4, in welcher der Handanschlag (16) und der Montagehalter (5) aus einem Stück sind.

6. Bremshebelaufbau nach Anspruch 1, in welcher der Montagehalter (5) zusammen mit dem Handanschlag (16) mit einem Überzug (19) bedeckt sind.

## Revendications

1. Assemblage de poignée de frein pour bicyclette à monter sur une partie recourbée vers le bas (1b) d'un guidon (1), ledit assemblage de poignée comprenant une patte de montage creuse (5) fixée à ladite partie recourbée en étant en saillie vers l'avant depuis celle-ci, ladite patte de montage comportant une surface supérieure (5a) servant d'appui pour la paume, ladite patte de montage permettant l'entrée d'un câble de commande de frein (W) par l'arrière, un levier de frein (7) connecté à pivotement à ladite patte de montage en s'étendant vers le bas depuis celle-ci et un arrêt pour la main (16) disposé dans une partie avant de ladite patte de montage en s'étendant vers le haut au-dessus de ladite surface supérieure, caractérisé en ce que ledit arrêt pour la main (16) présente une partie supérieure (18) en saillie dans le sens de la largeur de la bicyclette.

2. Assemblage de poignée de frein selon la revendication 1, dans lequel ladite partie supérieure (18) dudit arrêt pour la main (16) est en saillie dans les deux directions dans le sens de la largeur de la bicyclette.

3. Assemblage de poignée de frein selon les revendications 1 ou 2, dans lequel ledit arrêt pour la main (16) a une partie de base (17) comprenant une partie plus étroite (17a) dans le prolongement de ladite partie supérieure (18).

4. Assemblage de poignée de frein selon l'une quelconque des revendications 1 à 3, dans lequel ladite partie supérieure (18) dudit arrêt pour la main (16) est également en saillie légèrement vers l'arrière.

5. Assemblage de poignée de frein selon l'une quelconque des revendications 1 à 4, dans lequel ledit arrêt pour la main (16) est réalisé d'une pièce avec ladite patte de montage (5).

6. Assemblage de poignée de frein selon la revendication 1, dans lequel ladite patte de montage (5) et ledit arrêt pour la main (16) sont recouverts par un revêtement (19).
